(19) Europäisches Patentamt
European Patent Office
Office européen des brevets

(11) **EP 3 300 459 B1**

(12) **EUROPEAN PATENT SPECIFICATION**

(45) Date of publication and mention
of the grant of the patent:
**28.08.2019 Bulletin 2019/35**

(51) Int Cl.:
*H05B 37/02* *(2006.01)*     *H05B 33/08* *(2006.01)*

(21) Application number: **16189904.2**

(22) Date of filing: **21.09.2016**

(54) **METHOD AND ARRANGEMENT FOR CONTROLLING LIGHTING BASED ON USER TRACKING**

VERFAHREN UND ANORDNUNG ZUR BELEUCHTUNGSSTEUERUNG AUF DER BASIS VON BENUTZERVERFOLGUNG

SYSTÈME ET PROCÉDÉ DE COMMANDE D'ÉCLAIRAGE BASÉ SUR LA LOCALISATION D'UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.03.2018 Bulletin 2018/13**

(73) Proprietor: **Helvar Oy Ab**
**02150 Espoo (FI)**

(72) Inventor: **Pulkkinen, Heikki**
**02150 Espoo (FI)**

(74) Representative: **Berggren Oy, Helsinki & Oulu**
**P.O. Box 16**
**Eteläinen Rautatiekatu 10A**
**00101 Helsinki (FI)**

(56) References cited:
**EP-A2- 2 410 822     WO-A1-2009/003279**
**WO-A1-2011/134003**

**Description**

**FIELD OF THE INVENTION**

The invention relates to the operation of devices that control lighting in spaces that are large enough to be illuminated with a number of sensor-controlled light sources. In particular the invention relates to the aim of providing sufficient light to all users of the space while simultaneously reducing unnecessary energy consumption.

**BACKGROUND OF THE INVENTION**

Large illuminated spaces like offices, industrial buildings, warehouses, commercial centres, car parks, sports arenas and the like present a large potential for optimizing the lighting through intelligent control. Automatic lighting control is making its way even to smaller illuminated entities like homes. The aim is typically to ensure that all users of the space get the light they need, but unnecessary lights are turned off or at least dimmed low to save energy.

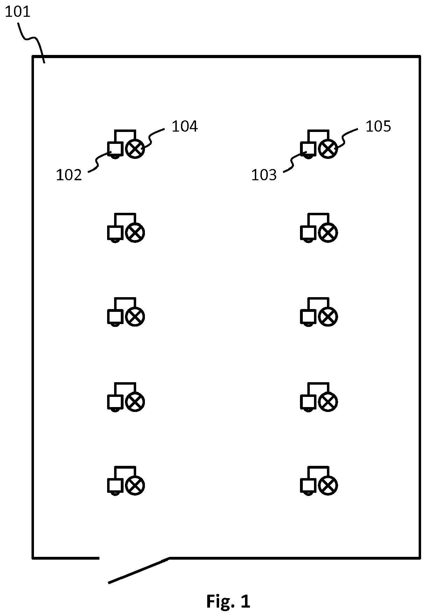

Fig. 1 illustrates schematically an open-floor office 101, which is an example of an illuminated space. Presence and/or movement of users in the space are detected with sensors, of which sensors 102 and 103 are shown as examples. A multitude of luminaires are available for illuminating the space. Luminaires 104 and 105 are shown as examples. Each luminaire is capable of illuminating a particular portion of the space, and each sensor is capable of detecting presence and/or movements within its field of view. It is possible but not necessary that the fields of view of the sensors coincide, at least to a certain extent, with the portions that the luminaires illuminate.

The idea behind using presence and/or movement sensors to control the lighting is to only keep those areas illuminated where presence and/or movements were detected. This would work well if the detection was 100% reliable and up to date. In practice it is not, due to two main reasons. A typical PIR (passive infrared) sensor only detects movement and does not react to a stationary occupant, and the fields of view of the sensors do not cover every inch of the space. The lighting designer must consider, how long the lights should be kept on after the latest signal from a sensor, how sharply they could be dimmed down after that, and whether the lights can be dimmed to zero or whether some minimum level of illumination should be maintained. The choices represent a balance between energy savings and user comfort: shorter delays save more energy but are more likely to irritate users if the lights tend to go off despite someone still being present, and vice versa.

The two basic approaches to automatically controlled lighting are central control and distributed control. In the example of fig. 1 each luminaire is equipped with its own sensor, so the lighting system could be of the distributed control type: it is possible that each luminaire controls its own actions, based on the inputs it receives from its sensor, completely independently of other luminaires in the space. Completely distributed control involves advantages like easy commissioning and straightforward later modifications, because sensor-equipped luminaires may be added or removed or their locations changed without having to worry about what the other luminaires do. The other extremity on the axis of control approaches would be fully centralized control, in which the sensor signals would go to a central control entity that used them to make decisions and gave corresponding lighting commands to the luminaires. Centralized control enables optimizing the operation of the lighting system better as a whole, but it requires more programming both in the commissioning phase and during later modifications.

A prior art publication EP 2 852 259 A1 discloses a centrally controlled lighting system in which the lights on different areas are turned on and off depending on whether persons are detected on particular areas or their neighbouring areas. The publication suggests turning on the lights of all neighbouring areas, at least to a preparatory level, after a certain time has passed since the detection of the person on the original area. Additionally the publication suggests that if a subsequent detection comes from a neighbouring area, the lights on the original area can be turned off more quickly, because the person is assumed to have moved to the neighbouring area.

Another prior art document WO 2011/098931 A1 discloses a centrally controlled lighting system in which the monitored space is divided into zones, so that each zone has its own sensor for detecting movement. The system follows the propagation of users from one zone to another. If one of the zones appears to always produce the first signal, the system learns to regard that zone as the one closest to the door.

Further in related art, WO 2011/134003 A1 discloses an apparatus and methods for controlling the illumination throughout an area where even and constant lighting is not required. The disclosed approach includes one or more light sources, such as luminaires, the status of which is controlled by a controller responsive to a sensor for detecting a parameter of interest. Preferably the sensor detects motion of a subject moving through the area of controlled illumination. Each independent controller may receive and transmit signals indicative of the status of one or more nearby light source for determining and controlling the lighting status of the light source with which it is in controlling communication. The determining by the controller is preferably carried out by a programmed microprocessor. The communication between controllers may be wireless. The signals communicated among controllers may be hierarchical for determining whether a response is required and what the response might be.

**SUMMARY OF THE INVENTION**

It is an objective of the present invention to provide devices and methods for controlling the light emitted by a light source so that both energy consumption and user comfort can be optimised without placing excessive requirements to manual configuring and without requiring the programmable devices involved to have excessive processing power.

The objects of the invention are achieved by using a timer to measure a period of time until the light is to be set to a passive level, and by allowing luminaires of a lighting system to learn independently, how much they should change the time remaining until expiry of the timer upon receiving external control signals that indicate presence of users elsewhere.

According to an aspect of the invention there is provided a method for controlling the light emitted by a light source. The method comprises the characterising features that are recited in the independent claim directed to a method.

According to another aspect of the invention there is provided a device for controlling the light emitted by a light source. The device comprises the characterising features that are recited in the independent claim directed to a device.

According to another aspect of the invention there is provided a computer program comprising machine-readable instructions that, when executed by one or more processors, are configured to cause the implementation of a method of the kind described above.

The computer program may be embodied on a volatile or a non-volatile computer-readable record medium, for example as a computer program product comprising at least one computer readable non-transitory medium having program code stored thereon, the program code, which when executed by an apparatus, causes the apparatus at least to perform the operations described hereinbefore for the computer program in accordance with the third aspect of the invention.

The exemplifying embodiments of the invention presented in this patent application are not to be interpreted to pose limitations to the applicability of the appended claims. The verb "to comprise" and its derivatives are used in this patent application as an open limitation that does not exclude the existence of features that are not recited. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

**BRIEF DESCRIPTION OF THE DRAWINGS**

Figure 1     illustrates an illuminated space with a lighting system,
figure 2     illustrates a lighting system where luminaires are capable of wireless communications,
figure 3     illustrates a method or computer program,
figure 4     illustrates another method or computer program,
figure 5     illustrates another method or computer program,
figure 6     illustrates the effect of self-learning on delay values,
figure 7     illustrates a lighting system with centralized control,
figure 8     illustrates another method or computer program, and
figure 9     illustrates a device according to an embodiment of the invention.

**DETAILED DESCRIPTION**

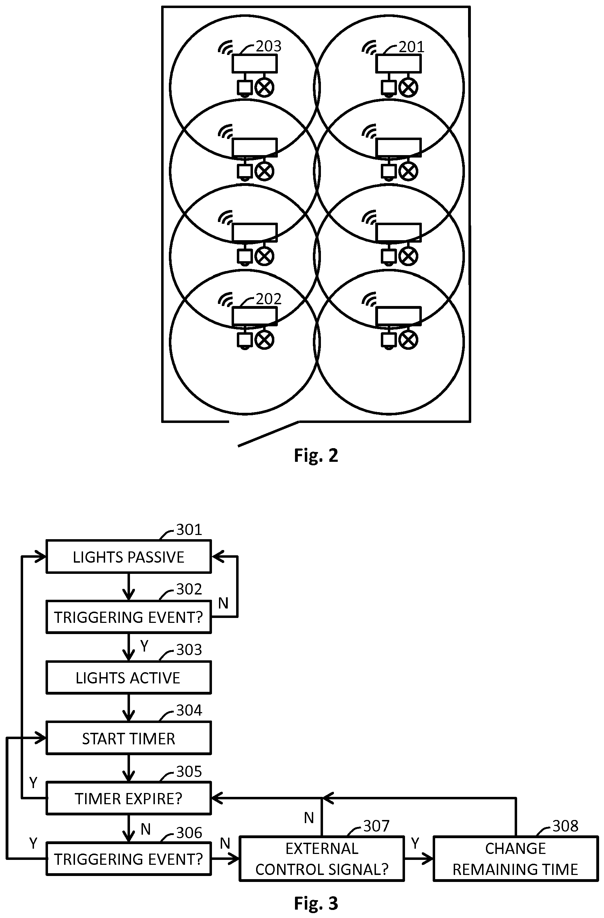

A method for controlling the light emitted by a light source according to a first embodiment of the invention is described with reference to the lighting system of fig. 2 and the flow diagram of fig. 3, of which the latter can be read also as a description of a computer program comprising machine-readable one or more sets of instructions that, when executed by one or more processors cause the execution of the method.

The lighting system comprises a number of so-called smart standalone luminaires, where the term "standalone" means that the distributed control approach is employed. There is no centralized control system, but each luminaire is equipped with sufficient intelligence to execute a self-learning algorithm that aims at optimizing both the user comfort factor (UCF) and the energy conservation factor (ECF). UCF is defined as the ratio of correctly determined time of occupancy and the total time of occupancy, so it measures the proportional amount of time during which a user gets the light he needs. ECF is defined as the ratio between correctly estimated states when the area is unoccupied and all cases when the area is unoccupied, so it measures the proportional amount of time during which the lights are appropriately off.

Each luminaire is also equipped with a sensor capable of detecting the presence of a user. For practical reasons the sensors are typically PIR (passive infrared) sensors, so exactly speaking they detect movements and not presence, but the aim is nevertheless to have lights on when one or more users are present and off when there is nobody around.

The method comprises setting the light to an active level according to block 303 in fig. 3 in response to a triggering event 302 indicating presence of a user. The concept of an active level is used generally to denote an amount of emitted light that satisfies the current needs of the user with respect to illumination. Numerous ways exist for defining what are the right amount and characteristics of light, including but not being limited to daylight harvesting in which a target illumination level is defined, and artificial light is produced to a sufficient amount so that together with naturally occurring ambient light the target illumination level is achieved. Thus the active level does not necessarily mean a stable amount or stable quality of emitted light, but merely the illumination conditions that the luminaire can affect and that are meant to serve the user in the best possible way. The definition of an active level may comprise more attributes than just brightness; examples are spectral content (i.e. colour and/or colour temperature) and amount of deliberate variation (for example to imitate the naturally varying character of daylight).

The triggering event 302 may be a signal received from a movement sensor, indicating presence of a user within an illumination area of the very light source that is controlled. Fig. 2 illustrates schematically the field of view of each sensor as a circle. The sensors are so close to their respective light sources that the field of view of a sensor essentially overlaps with the illumination area of the respective light source.

In some cases even a preparatory lighting level may qualify as an active level: for example a method known from the patent application EP2919562 can be used, in which a self-learning luminaire learns that a wireless message is frequently received from another lighting device shortly before the luminaire itself sees movement. The luminaire takes the received wireless message to indicate presence of a user within an area adjacent to the illumination area of the light source in the luminaire itself. In other words, the luminaire learns that a user typically comes to its illumination area through an adjacent area that is covered by the movement sensor of a neighbouring luminaire or some other luminaire nearby. As preparatory action for the apparently imminent arrival of the user within the illumination area the luminaire may start brightening the light. In such a case the received wireless message constituted a triggering event and the preparatory level to which the light is switched served as the active level. The preparatory level can be the same as the active level to which the light is set in response to detecting movement on the own illumination area of the luminaire, or it can be a lower level or even a higher level. The last-mentioned case may be used for example when the lights are used to guide the incoming user to the appropriate location.

The method comprises starting a timer, as illustrated by block 304 in fig. 3. The timer is adapted to run until expiry to measure a period of time until the light is to be set to a passive level that is lower than the active level. The concept of a passive level is used generally to denote an amount of emitted light that would not satisfy the current needs of any user with respect to illumination, but that is employed to avoid wasting energy to unnecessary illumination. The passive level may be zero, i.e. lights off altogether, or the passive level may be a low level that provides comfort lighting to users located elsewhere in the space. The passive level does not need to be any stable level, but it may mean gradual or stepwise dimming towards a lower level or zero. Block 305 in fig. 3 represents checking for the expiry of the timer: if the timer expires without any new triggering event having been observed, the light is set to the passive level as shown by block 301 in fig. 3. If a new triggering event occurs according to block 306 while the timer is running, the timer is reset (i.e. started anew) as illustrated by the arrow from block 306 to block 304. As in previously known methods, the aim is to maintain the light at the active level as long as the user remains within the illumination area of the luminaire.

While the timer is running, the method may comprise responding to a reception of an external control signal by changing the time remaining until expiry of the timer. The external control signal meant here is of the kind that indicates presence of a user elsewhere than within the illumination area of the luminaire.

Checking for received external control signals is illustrated as block 307, and changing the remaining time as block 308 in fig. 3.

The aim of changing the time that remains until expiry of the timer is to adapt the operation of the luminaire to situations where the user, for the needs of whom the light was set to an active level earlier, has left the illumination area of the luminaire. Of particular significance are external control signals that indicate that the user has left the whole illuminated space. As an example we may consider luminaires 201 and 202 in fig. 2. Luminaire 201 is located deep within the illuminated space, while luminaire 202 is the one closest to the door through which users enter and leave the space. If the luminaires are considered as nodes of a mesh network covering the illuminated space, luminaire 201 may be characterised as an interior node while luminaire 202 is a border node. In order to build up the mesh network the luminaires (and possible other nodes, if any) are capable of transmitting wireless messages and receiving each other's transmissions. Wireless messages from other nodes constitute the external control signals. Of particular significance in this respect are wireless messages that indicate presence of users within the field of view of the sensor located in or close to the luminaire that transmitted the message.

As an example we may consider a situation in which the sensor of luminaire 201 detected a user earlier, but not anymore, so the timer is running in luminaire 201. Normally the timer would run until its predetermined expiry time, after which luminaire 201 would set the light to a passive level. However, if luminaire 201 receives, while the timer is running, a wireless transmission from luminaire 202 indicating the presence of a user close to the door, it is probable that the user who previously resided within the illumination area of luminaire 201 has walked out of the door. Consequently it is appropriate for luminaire 201 to shorten the time remaining until expiry of the timer, in order to be able to set the light to the passive level earlier to save energy.

Associating different nodes of the mesh network with different time delays of setting light to passive level corresponds intuitively to the ways in which the users behave in the illuminated space. It is reasonable to assume that a node that is close to the door or otherwise at the border of the illuminated space will see numerous passers-by, i.e. users who spend only a relatively short time within the area covered by that node. Those users also move quite actively, so they are easy to detect relatively reliably even with a simple passive infrared sensor. Therefore it is viable to associate a border node of the mesh network with a relatively short time delay. Respectively an interior node will probably see users spending longer times within its illumination area, and those users may remain relatively immobile, if they e.g. sit at a table. A simple PIR sensor may make only quite infrequent observations of an immobile user, and the user will quickly find it very irritating if the light tends to go passive too easily. Therefore an interior node should be associated with a longer time delay.

Basically there are two possibilities of what may happen after the execution of the method returns from block 308 to block 305 in fig. 3. As an example we may assume that the timer in luminaire 201 was originally set to run until, say, 20 minutes, and an external control signal received from luminaire 202 should shorten that to five minutes. If the timer in luminaire 201 had been running for five minutes or more already before receiving the external control signal from luminaire 202, the remaining time will be changed to zero in block 308 and the return to block 305 leads immediately to a finding that the timer has expired, resulting in setting the light at passive level according to block 301. If, however, the timer in luminaire 201 had only been running for less than five minutes, shortening the remaining time in block 308 leads back to circulating through blocks 305, 306, and 307 until the timer reaches five minutes and triggers a return from block 305 to block 301.

An interesting question is, whether an external control signal from luminaire 203 should lead to changing the time remaining until expiry of the timer in luminaire 201. According to a first approach it should not, at least not to the same extent as an external control signal from luminaire 202. This is because luminaire 203 constitutes another interior node of the mesh network covering the illuminated space, so even if the user had actually moved there after previously residing under luminaire 201, the user is still within the illuminated space and could consider it bad service if luminaire 201 changed faster to the passive level. However, according to another approach the light should always "follow" the user in the illuminated space, so that if it can be deduced with high probability that the movement detected under luminaire 203 was caused by the user who previously resided under luminaire 201, the last-mentioned could well be dimmed down relatively quickly.

In order to provide more flexibility it may be advisable to replace the division into border and interior nodes with a more flexible classification or characterisa-tion of other nodes according to the effect they should have on the time remaining until expiry of the timer. Other nodes may be time-shortening nodes or time-lengthening nodes, and the extent to which each of them should shorten or lengthen the time remaining until expiry of the timer can be defined even node by node.

In order to tell the luminaires whether they should change the time remaining until expiry of the timer in response to receiving an external control signal and by how much, it is possible to manually configure the nodes of the network. Such manual configuring would tell, which other nodes are border nodes and which are interior nodes, or - in the more general case - to which extent each other node should change the time remaining until expiry of the timer. However, manual configuring is laborious, involves the possibility of human error, and obligates the person(s) responsible for the lighting to reconfigure the system every time when luminaires are replaced, removed, or added or when there are changes that affect the border/interior node status or other classification of the luminaires. In order to avoid the disadvantageousness of manual configuring, the method according to an embodiment of the invention involves elements of automatic self-configuration.

The key to automatic self-configuration is the capability to receive and analyse the external control signals from other nodes of the mesh network. After having received a plurality of external control signals, which indicate presence of users elsewhere, the method comprises associating different sources of external control signals with specific amounts of time by which the time remaining until expiry of the timer will be changed. Next time when an external control signal is received while the timer is running, the time remaining until expiry of the timer can be changed by an amount associated with the source from which the external control signal was received.

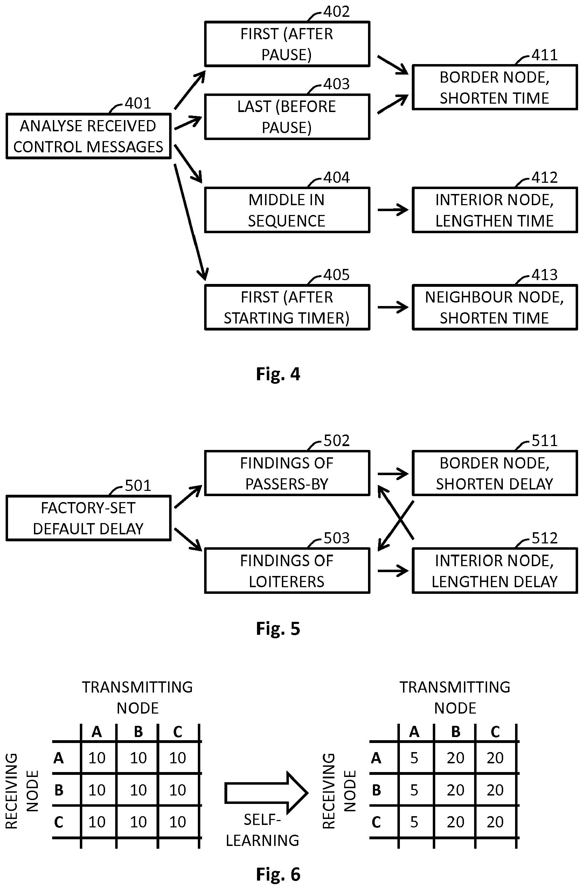

A number of rules can be applied to associating the different sources of external control signals with shortening or lengthening the expiry time of the timer. Fig. 4 illustrates some examples of such rules. Block 401 in fig. 4 represents analysing a plurality of received external control signals with respect to the sources they originated from and the relative times of receiving them. If a particular source is repeatedly recognized as the originator of a first external control signal after a period of no received external control signals, as in block 402, it is reasonable to assume that source to be located at an entrance: the period of no received external control signals suggests that the illuminated space was empty for a certain time, and the first user entering the space was detected by that particular source. Similarly if a particular source is repeatedly recognized as the originator of a last external control signal before a period of no received external control signals, as in block 403, it is reasonable to assume that source to be located at an exit: that source was the last one to detect a user, after which the illuminated space was left empty. In both cases that particular source of received external control signals is recognized as a border node and/or associated with shortening the time that remains until expiry of the timer, as in block 411.

If a particular source of received external control signals is repeatedly recognized as the originator of control signals that come in the middle of sequences of received control signals, as in block 404, it is reasonable to assume that particular source to be somewhere along a path that a user takes while moving across the illuminated space. Such a source is at least not a border node but an interior node, so it may be advisable to associate it with lengthening the time remaining until expiry of the timer, as in block 412 of fig. 4, or with keeping the expiry time unchanged.

If a particular source of received external control signals is repeatedly recognized as the originator of the first control signal after starting the timer, as in block 405, the question arises how to treat neighbouring nodes. It may be reasonable to assume that particular source to be the first node through which the user walks away. Particularly important are those instances of starting the timer that result in the timer expiring without new triggering events having been observed, because they correspond to cases where the user was detected moving within the present illumination area but then disappeared and didn't come back. If such disappearances always seem to begin by walking through the field of view of the sensor in a particular other luminaire, it can be assumed that similar behaviour will continue also in the future, and that particular source of received external control signals can be associated with shortening the time remaining until expiry of the timer.

We may ask, what should be the default value of the expiry time before considering any possible shortening or lengthening due to received external control signals. Taken that there are bound to be border nodes and interior nodes in the mesh network, it may not be the best possible solution to apply the same default expiry time in each node: a border node (or in general: a node through which users frequently just pass, without remaining there for long) could apply a shorter default expiry time than an interior node (or in general: a node at which users frequently spend longer times). However, again it is not advisable to require the installing technician to manually configure the luminaires to be either border or interior nodes, or to manually program the default expiry times luminaire by luminaire. It is more advisable to make the method comprise an aspect of self-learning also in this respect.

Fig. 5 illustrates schematically one possible way of self-learning. According to block 501, the luminaires may come all initially with a factory-set default expiry time, called the delay in fig. 5 for short. The self-learning method comprises examining, whether the observations made by the own sensor of the luminaire come in patterns that reflect passers-by, as in block 502. Patterns that reflect passers-by may be for example individual (or very short sequences of) observations that seldom last for longer than just a few seconds. If such patterns are recognized, the method comprises deducing that the luminaire may constitute a border node, and shortening the default expiry time according to block 511. Similarly the method comprises examining, whether the observations made by the own sensor of the luminaire come in patterns that reflect loiterers, as in block 503. Patterns that reflect loiterers may be for example long sequences of observations that last for several minutes or tens of minutes, when a user is present and moves sporadically so that the sensor detects the same user over and over again. If such patterns are recognized, the method comprises deducing that the luminaire may constitute an interior node, and lengthening the default expiry time according to block 512.

The result of self-learning is preferably not irreversible but dynamically changeable. As illustrated by the arrows from block 511 to block 503 and from block 512 to block 502 in fig. 5, even if a node has previously determined its role as a border node or an interior node, it may continue analysing the patterns of user observations that it makes, and continuously tune its default expiry time according to the latest findings. This enables the system to adapt to changes that may take place in the physical configuration of the lighting system, in the physical layout of the illuminated space, and/or in the behaviour of the users.

The possibility of continuously tuning the default expiry time according to the latest findings may have the consequence that nodes of the mesh network are not classified strictly as border nodes or interior nodes. Rather, each node is located somewhere on a continuous axis between a pure border node (with the shortest possible default expiry time) and a pure interior node (with the longest possible default expiry time). The location of the node on said continuous axis (and thus its default expiry time) may continuously change, when always the newest user observations are analysed.

Fig. 6 illustrates a simplified example where the mesh network comprises three self-learning nodes A, B, and C. A horizontal row in each 3x3 table illustrates the reactions of a particular node to detecting a user at any of the nodes: for example on the top row (the "A" row) the first box shows the expiry time that node A will apply in response to the node itself detecting a user, the second box shows the expiry time that node A will apply in response to receiving an external control signal indicating that node B detected a user, and the third box shows the expiry time that node A will apply in response to receiving an external control signal indicating that node C detected a user. The boxes A-A, B-B, and C-C on the diagonal show the default expiry times that each node applies when starting its timer in response to the node itself having detected a user.

According to the table on the left, in the beginning each node applies an expiry time of 10 minutes regardless of at which node the user was detected. This is because none of the nodes has learned yet, whether the node itself is a border node or an interior node, or whether the other nodes are border nodes or interior nodes. As the time goes by, each node begins to learn not only its own role but those of the other nodes as well, for example by applying the methods explained above with reference to figs. 4 and 5: we assume that node A is found to be a border node and nodes B and C are found to be interior nodes. Thus after a while the expiry time table begins to look like the one on the right in fig. 6: if a user is detected at the border node A, all nodes (including A itself) will apply a shortened expiry time of 5 minutes, but if a user is detected at any of the interior nodes B or C, all nodes will apply a lengthened expiry time of 20 minutes.

The simplified example of fig. 6 can be easily generalized to more complicated mesh networks that comprise any number of nodes.

The method may combine the approach of fig. 5, where a luminaire itself learns whether it is a border node or an interior node, to the approach of fig. 4, where a particular node learns, whether the other luminaires are border nodes or interior nodes. When transmitting a wireless message that the other luminaires will receive as an external control signal, the luminaire may include in the wireless message an indication of the default expiry time that itself applies when detecting a user. When another node receives such a wireless message as an external control signal while its timer is running, it can directly tell, where on the axis between a pure border node and a pure interior node the originator of the external control signal was located, and how much (if at all) it should change the time remaining until the expiry of the timer respectively.

The rules discussed so far more or less assume that the user is alone in the illuminated space. For example if a particular other node has been deduced to be a border node according to blocks 402 or 403 in fig. 4, and then an external control signal is received from it (possibly even as the last one of a sequence of received signals), it is reasonable to assume that the user has left his place and walked out of the illuminated space through said border node, and the expiry time until setting lights to passive level can be safely shortened. However, there is the possibility that the user is actually still present, and only moves so little that the interior nodes make no detections, and someone else peeks in the room through the door. The external signal from the border node could be triggered by such other user, in which case it should not shorten the time remaining to the expiry of the timer. This could be accounted for by applying suitable criteria next time when an external control signal is received while the timer is running from a source associated with shortening the time remaining until expiry of said timer. The shortening of the remaining time could be executed only if the interval between starting the timer and receiving the external control signal was longer than a predetermined first threshold and/or shorter than a predetermined second, longer threshold. The first threshold should be short enough to reflect the fact that it is impossible that the user had walked to the door in such a short time.

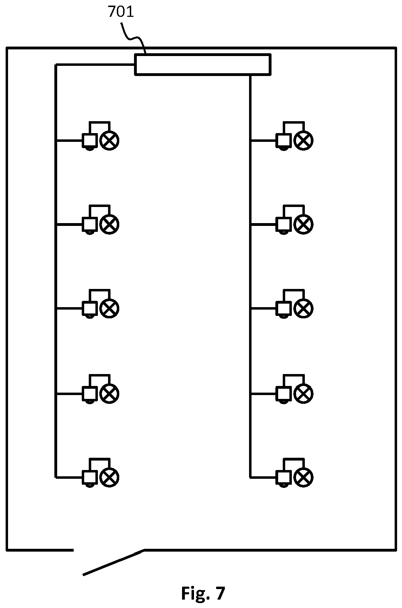

A more comprehensive approach to avoiding false deductions in the case of multiple users being present in the illuminated space simultaneously involves a method that can be called multi-hypothesis tracking, or MHT for short. MHT can be practised in each luminaire or other distributed-domain device separately, if the control engines included in them comprise sufficient computational resources. However, in order to cover also the other possibility in this description, in the following it is assumed in accordance with fig. 7 that a central controller 701 receives the signals that the sensors produce when they detect movement. The connections between the sensors and the central controller 701 are shown as wired connections in fig. 7, but they can be wireless or they can consist of a mixture of wired and wireless connections.

MHT is a method that generates and maintains multiple hypotheses about the possible state of the system. A hypothesis consists of tracked targets (their states and possibly some information about their history) and a probability of the hypothesis. Let $\Theta$ be an association and movement hypothesis for measurement $y_k$

$$\Theta: y_k \mapsto (T, N).$$

In other words, $\Theta$ is a mapping from the observation $y_k$ to targets $T$ and nodes $N$. A given $\Theta$ means that target $T_n$ has moved to $N_m$ and caused the measurement (or sensor signal) $y_k$ from there. If the terminology of Hidden Markov Models was used, it could be said that the target $T_n$ emitted $y_k$. The index $n$ gets the positive integer values 1, 2, 3,... according to how many separate targets (users) are tracked. To account for new tracks (i.e. users from which only the very first observation was made) and false alarms (i.e. sensor signals that were not cause by any actual target), indexes $n = 0$ and $n = -1$ are used respectively.

Hypothesis $H$ is defined as

$$H = \left\{\Theta, \widehat{H}\right\},$$

where $\widehat{H}$ is the parent hypothesis from the previous step. This recursive formula implies that $H$ is the set of all association

and movement hypotheses $\Theta$ up to that time. Hypotheses can be merged and pruned, where merging is particularly important when the location of targets is described in a discrete grid: there are only as many possible locations as there are sensors, so two hypotheses can have exactly the same tracked target positions. Merging them results in a new hypothesis, the probability of which is the sum of the probabilities of the merged hypotheses. Pruning means that only the $M$ most probable hypotheses are maintained, where $M$ is an integer parameter, the value of which is chosen so that the mathematical model does not become overly complicated.

A hypothesis of a new track can be created for every new measurement even if the already tracked targets nearby are usually more probable explanations: possible unnecessarily created hypotheses with new tracks will soon get pruned off due to their low probability. If there are no already tracked targets nearby, possible explanations are a new track and a false alarm. The probabilities that will be given to the corresponding hypotheses should reflect the reliability of the sensors: for example PIR sensors in a normal indoor space are so reliable that the probability of a new track can be higher than that of a false alarm.

Tracked objects are deleted in the MHT method if no updates occurred to them in a given time period, which is called the lifetime of the targets. This lifetime can be shorter in a border node than in an interior node, particularly if there are hidden corners inside the illuminated area where users may reside without being detected but from which they cannot escape without triggering at least one sensor. This selection of lifetime of the targets in the MHT method is similar to the selection of default expiry times in nodes that only applied a simpler time-delayed model, as has been explained earlier.

Bayes' theorem can be applied to express the probability of hypothesis $H$ for given observations up to time $k$. With only the most recent observation $y_k$ we may write

$$P(H|Y_k) = P(H|y, Y_{k-1}) = \frac{P(y_k|H, Y_{k-1}) \cdot P(H|Y_{k-1})}{P(y_k|Y_{k-1})}$$

Since $P(y_k|Y_{k-1})$ does not depend on $H$, it can be considered constant. The previously presented definition of a hypothesis can be applied to the term $P(H|Y_{k-1})$ to get a linear relationship

$$P(H|Y_k) \propto P(y_k|H, Y_{k-1}) \cdot P(\Theta|\widehat{H}, Y_{k-1}) \cdot P(\widehat{H}|Y_{k-1}).$$

The probabilities of $y_k$ and $\Theta$ depend only on the new hypothesis and the parent hypothesis, respectively. $Y_{k-1}$ does not affect their conditional probability, so it can be removed from these terms, giving

$$P(H|Y_k) \propto P(y_k|H) \cdot P(\Theta|\widehat{H}) \cdot P(\widehat{H}|Y_{k-1})$$

which is in good conformity with the fundamental theorem of target tracking according to S. Blackman and R. Popoli: Design and analysis of modern tracking systems, 1999. In the following the first, second, and third terms of this formula are described separately.

The second term $P(\Theta|\widehat{H})$ is the probability of target $T_n$ moving to node $N_m$ and the other targets not moving. In the case of false alarm or new track association, none of the targets move. For false alarm association ($n = -1$) one needs to compute the probability of targets staying at their current locations. For a new track association ($n = 0$) this has to be multiplied by the probability of a new track emerging in node $N_m$. All these cases can be combined to equation

$$P(\Theta|\widehat{H}) = \begin{cases} 1 & if\ n = -1 \\ P_{\Delta t}(a\ new\ track\ at\ N_m) & if\ n = 0 \\ P_{\Delta t}(T_n\ moved\ to\ N_m) & otherwise \end{cases}$$

The first tem $P(y_k|H)$ is the probability of $T_n$ emitting $y_k$ and other targets not emitting anything. Because the probability is conditional for given $H$, $T_n$ is assumed to be located at node $N_m$. When $n = -1$, the term corresponds to a false alarm at $N_m$ and no emissions from the actual targets. In mathematical form this is

$$P(y_k|H) = \begin{cases} P_{\Delta t}(false\ alarm\ at\ y_k) \cdot \prod_j P_{\Delta t}(T_j\ didn't\ emit) & if\ n = -1 \\ P_{\Delta t}(y_k\ emitted\ from\ N_m) \cdot \prod_j P_{\Delta t}(T_j\ didn't\ emit) & if\ n = 0 \\ P_{\Delta t}(false\ alarm\ at\ y_k) \cdot \prod_{j \neq n} P_{\Delta t}(T_j\ didn't\ emit) & otherwise \end{cases}$$

The last term $P(\hat{H}|Y_{k-1})$ is the probability of the parent hypothesis $\hat{H}$. The probability of a hypothesis can be calculated recursively by using the three last-mentioned formulas.

The same parent hypothesis is used to generate multiple new hypotheses it is possible to speed up the calculation by defining

$$C_{\hat{H}} = \prod_j P_{\Delta t}(T_j\ didn't\ emit)$$

and using it to write what will be called here the first formula of the probability

$$P(H|Y_k) \propto A_H \cdot C_{\hat{H}} \cdot P(\Theta|\hat{H}) \cdot P(\hat{H}|Y_{k-1})$$

where $A_H$ is

$$A_H = \begin{cases} P_{\Delta t}(false\ alarm\ at\ y_k) & if\ n = -1 \\ P_{\Delta t}(y_k\ emitted\ from\ N_m) & if\ n = 0 \\ \dfrac{P_{\Delta t}(y_k\ emitted\ from\ N_m)}{P_{\Delta t}(T_j\ didn't\ emit)} & otherwise \end{cases}$$

A particular feature of tracking users with the sensors of a lighting system is that there may be extended periods of not getting any signals at all from the sensors. Regular updates can be run without any new observations to keep the list of hypotheses up to date. In this case each current hypothesis $\hat{H}$ is used to form only one new hypothesis $H$ which are given relative probabilities according to the first formula of the probability named above. Because there are no observations $A_H = 1$ and since none of the targets is moving $P(\Theta|\hat{H}) = 1$, and we may write what will be called here the second formula of the probability

$$P(H|Y_k) \propto C_{\hat{H}} \cdot P(\hat{H}|Y_{k-1})$$

It is possible that this calculation changes the most likely hypothesis, because $C_H$ is larger for hypotheses with a smaller number of targets.

The constant term $P(y_k|Y_{k-1})$ was not calculated, so the results given by the first or second formula of the probability is only proportional to the actual probability. In order to keep the magnitudes of the probabilities practical it is advisable to normalize them so that their sum equals 1.

An empty hypothesis can be added to account for situations in which the tracking has gone wrong and all targets have managed to leave the illuminated space without the tracking algorithm taking proper notice. An empty hypothesis may also be called an initialisation hypothesis, as it can be considered as a way to initialise the tracking method with a small probability, like one tenth of the probability of the previous least likely maintained hypothesis.

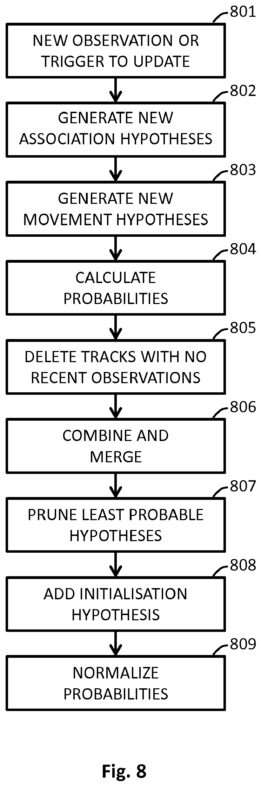

The MHT method can be summarized in the way illustrated in fig. 8. Initially there is only one hypothesis, with no tracked targets and probability equal to one. Block 801 in fig. 8 represents receiving a new observation (i.e. a new sensor signal) or a trigger signal that is used to initiate an updating round in the absence of any new observations. Block 802 represents generating all possible association hypotheses for each parent hypothesis, and block 803 represents generating all possible movement hypotheses for each association hypotheses. Thus together blocks 802 and 803 represent generating all possible mappings of the kind $\Theta : y_k \mapsto (T,N)$, which are different explanations of how the new observation could have been originated (which target(s) were observed by which sensor(s) to generate the observation)

Block 804 represents calculating the probabilities of the hypotheses using the first or second formula of the probability, as described above. Block 805 represents deleting tracks which have no recent observations, taking into account the possibly different lifetimes of targets at different (border or interior) nodes of the mesh network. Block 805 represents combining all hypotheses from different parent hypotheses into a single list, and merging those hypotheses that give identical locations to the same targets. Block 807 in fig. 8 represents pruning the least probable hypotheses and only maintaining the M most probable hypotheses in order to limit the number of hypotheses so that the calculations can be performed with the available resources. Block 808 represents adding an initialisation (empty) hypothesis with small probability, and block 809 represents normalizing the probabilities of all maintained hypotheses so that their sum equals one.

In the centrally controlled lighting system of fig. 7 when the central controller 701 has executed the most recent round of the MHT method it may give lighting commands to the various luminaires in the illuminated space. Executing the MHT method has revealed the currently most likely hypothesis, which tells, whether there are users in the illuminated space and if yes, where (i.e. within the illumination area(s) of which luminaire(s)). The lighting commands should reflect the most likely hypothesis, so that lights are kept at active level at those parts of the illuminated space where the users most probably are.

If the MHT method was executed in each luminaire separately, the result (the probabilities of individual hypotheses) can be used to tell, what is the probability of there being a user within the illumination area of that particular luminaire. The luminaire may use this result to decide the level and other characteristics of lighting that it should produce.

A lighting system may combine features of distributed and central control. Distributed control, in which each luminaire applies for example the method of figs. 3, 4, and 5, is robust in the sense that the operation of the system is not very dependent on e.g. the communication connections between the nodes. Even if none of the communication connections would work, the users would still get relatively good lighting service at a reasonable level of consumed energy, because each luminaire would at least adapt its own operation according to fig. 5. And even when the communication connections work at least to some extent, not all the transmitted wireless messages need to go through to all other luminaires without problems: the self-learning process in each luminaire will always proceed on the basis of those external control messages that will be received.

Centralized control involves the advantage of receiving as much information as possible concerning the detected movements of users, and the central controller has typically more computational resources available than any of the nodes in the distributed domain, so for example the MHT method can be executed with a larger number of maintained hypotheses (and consequently better chances of getting all users tracked correctly) at each round. The central controller may also use information it receives from the luminaires to make more advanced calculations, like calculating the cross-correlations of sensors in different luminaires. The calculated cross-correlations can reveal information about the actual physical layout of the mesh network, i.e. where the luminaires are located with relation to each other. The centralized control may also calculate more accurate values for parameters, the more approximate values of which the luminaires had calculated independently. Thus for example the method illustrated in fig. 6 can be applied so that the luminaires calculated approximate values themselves, but after a certain period of collecting data to a central controller the last-mentioned could calculate more accurate values and send them back to the luminaires, where they would be used to replace the previous, independently calculated values.

The central controller can also learn to select and apply the control algorithm that suits best the behaviour of users in that particular space, for example by comparing the scores achieved by alternative control algorithms when analysed against history data. The analysis may comprise selecting a particular control algorithm (or a particular version of a control algorithm, like a version with particular values of one or more parameters) and simulating how the light levels would have been set in the luminaires of the lighting system if that control algorithm had been used to react to those sensor signals that have been stored as history data. The performance of the (version of the) algorithm could be evaluated by calculating the value of a score function. The time when lights are at active level could lower the score because of the energy used. However, also each instant when a light was at a simulated passive level when movement was detected by the corresponding sensor should also lower the score because the aim should be to maintain the lights at active level at locations where users are present. A penalty score can also be given for repeatedly and/or frequently changing the light level of the luminaires, to prefer control algorithms that achieve essentially the same scores in energy consumption and user comfort but with lesser changing of light levels. Penalizing the score for changes in light levels reflects the fact that users tend to like more a lighting system that just serves their needs in an unobtrusive and inconspicuous way than one in which the changes are clearly noticeable.

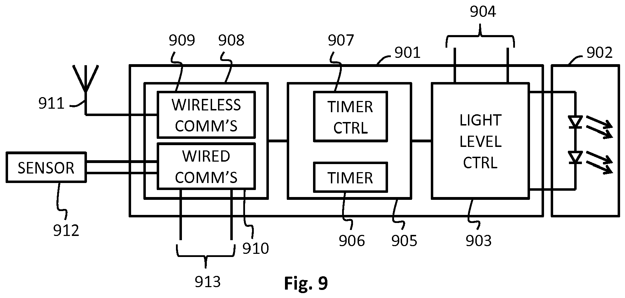

Fig. 9 illustrates schematically a device 901 for controlling the light emitted by a light source 902. The device 901 may be a so-called LED driver, and it is not necessarily separate from the light source 902 but the two may be built as an integrated entity. The device 901 comprises a light level controller 903, which may comprise one or more switched-mode power sources that are configured to convert input power coming through an input power connection 904 into regulated output power that is coupled to the light source 902. A control block 905 is in turn configured to control the operation of the light level controller 903. The control block 905 may comprise one or more programmable units such as microcontrollers and/or microprocessors that operate by executing machine-readable instructions stored in a program memory (not separately shown in fig. 9).

The control block 905 comprises a timer 906 that is configured to start at the occurrence of a triggering event and to run until expiry to measure a period of time until the light is to be set to a passive level. The light level controller 903 responds to control commands it receives from the control block 905 by setting the light to an active level (which is higher than said passive level) in response to a triggering event indicating presence of a user. The light level controller 903 is configured to set the light to the passive level if the timer expires without any new triggering event having been observed.

A timer controller 907 is configured to respond to a reception of an external control signal while the timer 906 is running by changing the time remaining until expiry of the timer 906, taken that the external control signal indicated presence of a user elsewhere. The timer controller 907 is configured to associate, after a plurality of external control signals have been received that indicate presence of users elsewhere, different sources of external control signals with specific amounts of time by which the time remaining until expiry of the timer 906 will be changed. The timer controller 907 is also configured to change, next time when an external control signal is received while the timer is running, the time remaining until expiry of the timer 906 by an amount associated with the source from which the external control signal was received.

For receiving external control signals, and for transmitting indications of detected presence of users that constitute external control signals for other devices, the device 901 comprises a communications block 908, which in the embodiment of fig. 9 comprises a wireless communications part 909 and a wired communications part 910. The wireless communications part 909 is equipped with an antenna 911. The wired communications part 910 is coupled at least to a sensor 912 for detecting movements within an illuminated area of the light source 902. The wired communications part 910 may also comprise a connection to a wired lighting control bus 913, such as the DALI bus. The various communication connections to and from the device 901 do not need to constitute a common communications block 908, but this way of presenting them has been selected in fig. 9 for graphical clarity. Also the various ways of communicating may be arranged differently than in the drawing; for example the communications between the sensor 912 and the device 901 may take place wirelessly.

A computer program according to an embodiment of the invention comprises one or more sets of machine-readable instructions that, when executed by one or more processors, are configured to cause the execution of a method according to an embodiment of the invention.

**Claims**

1. A method for controlling the light emitted by a light source, comprising:

   - setting (303) the light to an active level in response to a triggering event (302) indicating presence of a user,
   - starting (304) a timer adapted to run until expiry to measure a period of time until the light is to be set to a passive level that is lower than said active level,
   - if the timer expires without any new triggering event having been observed, setting the light to said passive level,
   - responding to a reception (307) of an external control signal while the timer is running, which external control signal indicates presence of a user elsewhere, by changing (308) the time remaining until expiry of said timer,

   **characterized in that** the method comprises

   - after having received a plurality of external control signals from one or more presence sensors arranged elsewhere than within the illumination area of said light source, which external control signals indicate presence of users elsewhere, associating different sources of external control signals with specific amounts of time by which the time remaining until expiry of said timer will be changed in accordance with a number of rules, and
   - next time when an external control signal is received while the timer is running, changing the time remaining until expiry of said timer by an amount associated with the source from which the external control signal was received.

2. A method according to claim 1, comprising at least one of:

   - associating a particular source of received external control signals with shortening the time remaining until expiry of said timer, as a response to repeatedly recognizing that source as the originator of a first external control signal after a period of no received external control signals, or
- associating a particular source of received external control signals with shortening the time remaining until expiry of said timer, as a response to repeatedly recognizing that source as the originator of a last external control signal before a period of no received external control signals.

3. A method according to claim 2, wherein next time when an external control signal is received while the timer is running from a source associated with shortening the time remaining until expiry of said timer, executing the shortening of remaining time only if the interval between starting said timer and receiving such an external control signal was longer than a predetermined first threshold and/or shorter than a predetermined second, longer threshold.

4. A method according to any of the preceding claims, comprising:

- associating a particular source of received external control signals with lengthening the time remaining until expiry of said timer, as a response to repeatedly recognizing that source as the originator of control signals that come in the middle of sequences of received control signals.

5. A method according to any of the preceding claims, comprising:

- associating a particular source of received external control signals with shortening the time remaining until expiry of said timer, as a response to repeatedly recognizing that source as the originator of the first external control signal after starting said timer.

6. A method according to claim 5, in which the particular source of received external control signals is associated with shortening the time remaining until expiry of said timer, as a response to repeatedly recognizing that source as the originator of the first external control signal after such instances of starting said timer that result in the timer expiring without new triggering events having been observed.

7. A method according to any of the preceding claims, wherein said triggering event is a signal received from a movement sensor, indicating presence of a user within an illumination area of said light source.

8. A method according to any of claims 1 to 6, wherein said triggering event is a wireless message received from another lighting device and indicating presence of a user within an area adjacent to an illumination area of said light source.

9. A device for controlling the light emitted by a light source, comprising:

- a timer configured to run until expiry to measure a period of time until the light is to be set to a passive level,
- a light level controller configured to set the light to an active level, higher than said passive level, in response to a triggering event indicating presence of a user, and to set the light to said passive level if the timer expires without any new triggering event having been observed, and
- a timer controller configured to respond to a reception of an external control signal while the timer is running, which external control signal indicates presence of a user elsewhere, by changing the time remaining until expiry of said timer;

**characterized in that** said timer controller is configured to associate, after having received a plurality of external control signals from one or more presence sensors arranged elsewhere than within the illumination area of said light source and, which external control signals indicate presence of users elsewhere, different sources of external control signals with specific amounts of time by which the time remaining until expiry of said timer will be changed in accordance with a number of rules, and
wherein said timer controller is configured to change, next time when an external control signal is received while the timer is running, the time remaining until expiry of said timer by an amount associated with the source from which the external control signal was received.

10. A computer program for controlling the light emitted by a light source, comprising one or more sets of machine-readable instructions that, when executed by one or more processors, are configured to cause the execution of a method that comprises:

- setting the light to an active level in response to a triggering event indicating presence of a user,
- starting a timer adapted to run until expiry to measure a period of time until the light is to be set to a passive level that is lower than said active level,
- if the timer expires without any new triggering event having been observed, setting the light to said passive level,
- responding to a reception of an external control signal while the timer is running, which external control signal indicates presence of a user elsewhere, by changing the time remaining until expiry of said timer,

**characterized in that** the method comprises

- after having received a plurality of external control signals from one or more presence sensors arranged elsewhere than within the illumination area of said light source, which external control signals indicate presence of users elsewhere, associating different sources of external control signals with specific amounts of time by which the time remaining until expiry of said timer will be changed in accordance with a number of rules, and
- next time when an external control signal is received while the timer is running, changing the time remaining until expiry of said timer by an amount associated with the source from which the external control signal was received.

**Patentansprüche**

1. Verfahren zum Steuern des von einer Lichtquelle emittierten Lichts, umfassend:

   Einstellen (303) des Lichts auf einen aktiven Pegel als Reaktion auf ein auslösendes Ereignis (302), das die Anwesenheit eines Benutzers anzeigt,
   - Starten (304) eines Timers, der geeignet ist, bis zum Ablauf zu laufen, um eine Zeitspanne zu messen, bis das Licht auf einen passiven Pegel eingestellt werden soll, der niedriger als der aktive Pegel ist,
   - wenn der Timer abläuft, ohne dass ein neues auslösendes Ereignis beobachtet worden ist, Einstellen des Lichts auf den passiven Pegel,
   - Reagieren auf einen Empfang (307) eines externen Steuersignals während der Timer läuft, wobei das externe Steuersignal die Anwesenheit eines Benutzers anderswo anzeigt, durch Ändern (308) der verbleibenden Zeit bis zum Ablauf des Timers,

   **dadurch gekennzeichnet, dass** das Verfahren umfasst:

   - nach dem Empfangen mehrerer externer Steuersignale von einem oder mehreren Anwesenheitssensoren, die anderswo als innerhalb des Beleuchtungsbereichs der Lichtquelle angeordnet sind, wobei die externen Steuersignale die Anwesenheit von Benutzern anderswo anzeigen, Zuordnen verschiedener Quellen externer Steuersignale zu bestimmten Zeiträumen mit der die bis zum Ablauf des Timers verbleibende Zeit gemäß einer Reihe von Regeln geändert wird, und
   - nächstes Mal, wenn ein externes Steuersignal während der Timer läuft, empfangen wird, Ändern der verbleibenden Zeit bis zum Ablauf des Timers um einen Betrag, der der Quelle zugeordnet ist, von der das externe Steuersignal empfangen wurde.

2. Verfahren nach Anspruch 1, umfassend:

   - Zuordnen einer bestimmten Quelle empfangener externer Steuersignale zu einer Verkürzung der verbleibenden Zeit bis zum Ablauf des Timers als Reaktion auf das wiederholte Erkennen dieser Quelle als Urheber eines ersten externen Steuersignals nach einer Zeitspanne ohne empfangene externe Steuersignale, und/oder
   - Zuordnen einer bestimmten Quelle empfangener externer Steuersignale zu einer Verkürzung der verbleibenden Zeit bis zum Ablauf des Timers als Reaktion auf das wiederholte Erkennen dieser Quelle als Urheber eines letzten externen Steuersignals bevor einer Zeitspanne ohne empfangene externe Steuersignale.

3. Verfahren nach Anspruch 2, wobei das nächste Mal, wenn ein externes Steuersignal empfangen wird, während der Timer läuft, von einer Quelle die der Verkürzung der verbleibenden Zeit bis zum Ablauf des Timers zugeordnet ist, das Verkürzen der verbleibenden Zeit nur dann ausgeführt wird, wenn das Intervall zwischen dem Starten des Timers und dem Empfangen eines solchen externen Steuersignals länger als ein vorbestimmter erster Schwellenwert und/oder kürzer als ein vorbestimmter zweiter, längerer Schwellenwert war.

4. Verfahren nach einem der vorhergehenden Ansprüche, umfassend:

   - Zuordnen einer bestimmten Quelle empfangener externer Steuersignale zu einer Verlängerung der verbleibenden Zeit bis zum Ablauf des Timers als Reaktion auf das wiederholte Erkennen dieser Quelle als Urheber von Steuersignalen, die in der Mitte von Folgen empfangener Steuersignale kommen.

5. Verfahren nach einem der vorhergehenden Ansprüche, umfassend:

   - Zuordnen einer bestimmten Quelle von empfangenen externen Steuersignalen zu Verkürzung der verbleibenden Zeit bis zum Ablauf des Timers als Reaktion auf das wiederholte Erkennen dieser Quelle als Urheber des ersten externen Steuersignals nach dem Starten des Timers.

6. Verfahren nach Anspruch 5, bei dem die bestimmte Quelle empfangener externer Steuersignale der Verkürzung der bis zum Ablauf des Timers verbleibenden Zeit zugeordnet wird, als Reaktion auf das wiederholte Erkennen dieser Quelle als Urheber des ersten externen Steuersignals nach solchen Fällen des Starts des Timers, die dazu führen, dass der Timer abläuft, ohne dass neue auslösende Ereignisse beobachtet worden sind.

7. Verfahren nach einem der vorhergehenden Ansprüche, wobei das auslösende Ereignis ein von einem Bewegungssensor empfangenes Signal ist, das die Anwesenheit eines Benutzers innerhalb eines Beleuchtungsbereichs der Lichtquelle anzeigt.

8. Verfahren nach einem der Ansprüche 1 bis 6, wobei das auslösende Ereignis eine von einer anderen Beleuchtungsvorrichtung empfangene drahtlose Nachricht ist, die die Anwesenheit eines Benutzers in einem Bereich anzeigt, der an einen Beleuchtungsbereich der Lichtquelle angrenzt.

9. Vorrichtung zum Steuern des von einer Lichtquelle emittierten Lichts, umfassend:

   - einen Timer, der zum Betrieb bis zum Ablauf ausgelegt ist, um eine Zeitspanne zu messen, bis das Licht auf einen passiven Pegel eingestellt werden soll,
   - eine Lichtpegelsteuerung, die zum Einstellen des Lichts auf einen aktiven Pegel, der höher als der passive Pegel ist, als Reaktion auf ein auslösendes Ereignis, das die Anwesenheit eines Benutzers anzeigt, und zum Einstellen des Lichts auf den passiven Pegel, wenn der Timer abläuft, ohne dass ein neues auslösendes Ereignis beobachtet worden ist, ausgelegt ist, und
   - eine Timersteuerung, die zum Reagieren auf den Empfang eines externen Steuersignals während des Betriebs des Timers ausgelegt ist, wobei das externe Steuersignal die Anwesenheit eines Benutzers anderswo anzeigt, durch Ändern der verbleibenden Zeit bis zum Ablauf des Timers;

   **dadurch gekennzeichnet, dass** die Timersteuerung zum Zuordnen, nach dem Empfangen mehrerer externer Steuersignale von einem oder mehreren Anwesenheitssensoren, die anderswo als innerhalb des Beleuchtungsbereichs der Lichtquelle angeordnet sind, und wobei die externen Steuersignale die Anwesenheit von Benutzern anderswo anzeigen, verschiedener Quellen externer Steuersignale zu bestimmten Zeiträumen ausgelegt ist, mit denen die bis zum Ablauf des Timers verbleibende Zeit gemäß einer Reihe von Regeln geändert wird, und wobei die Timersteuerung zum Ändern der bis zum Ablauf des Timers verbleibenden Zeit um einen Betrag, der der Quelle zugeordnet ist, von der das externe Steuersignal empfangen wurde, beim nächsten Empfang eines externen Steuersignals, während der Timer läuft, ausgelegt ist.

10. Computerprogramm zum Steuern des von einer Lichtquelle emittierten Lichts, umfassend einen oder mehrere Sätze von maschinenlesbaren Anweisungen, die, wenn sie von einem oder mehreren Prozessoren ausgeführt werden, zum Veranlassen der Ausführung eines Verfahrens ausgelegt sind, das umfasst:

   - Einstellen des Lichts auf einen aktiven Pegel als Reaktion auf ein auslösendes Ereignis, das die Anwesenheit eines Benutzers anzeigt,
   - Starten eines Timers, der geeignet ist, bis zum Ablauf zu laufen, um eine Zeitspanne zu messen, bis das Licht auf einen passiven Pegel eingestellt werden soll, der niedriger als der aktive Pegel ist,
   - wenn der Timer abläuft, ohne dass ein neues auslösendes Ereignis beobachtet worden ist, Einstellen des Lichts auf den passiven Pegel,
   - Reagieren auf einen Empfang eines externen Steuersignals während der Timer läuft, wobei das externe Steuersignal die Anwesenheit eines Benutzers anderswo anzeigt, durch Ändern der verbleibenden Zeit bis zum Ablauf des Timers,

**dadurch gekennzeichnet, dass** das Verfahren umfasst:

- nach dem Empfangen mehrerer externer Steuersignale von einem oder mehreren Anwesenheitssensoren, die anderswo als innerhalb des Beleuchtungsbereichs der Lichtquelle angeordnet sind, wobei die externen Steuersignale die Anwesenheit von Benutzern anderswo anzeigen, Zuordnen verschiedener Quellen externer Steuersignale zu bestimmten Zeiträumen mit der die bis zum Ablauf des Timers verbleibende Zeit gemäß einer Reihe von Regeln geändert wird, und
- nächstes Mal, wenn ein externes Steuersignal während der Timer läuft, empfangen wird, Ändern der verbleibenden Zeit bis zum Ablauf des Timers um einen Betrag, der der Quelle zugeordnet ist, von der das externe Steuersignal empfangen wurde.

## Revendications

1. Procédé de contrôle de la lumière émise par une source de lumière, comprenant :

   - le réglage (303) de la lumière à un niveau actif en réponse à un événement déclencheur (302) indiquant la présence d'un utilisateur,
   - le lancement (304) d'une minuterie adaptée pour s'écouler jusqu'à expiration pour mesurer un laps de temps jusqu'à ce que la lumière doive être réglée à un niveau passif qui est inférieur audit niveau actif,
   - si la minuterie expire sans qu'aucun nouvel événement déclencheur n'ait été observé, le réglage de la lumière audit niveau passif,
   - la réponse à la réception (307) d'un signal de contrôle externe pendant que la minuterie s'écoule, lequel signal de contrôle externe indique la présence d'un utilisateur ailleurs, par modification (308) du temps restant jusqu'à l'expiration de ladite minuterie,

   **caractérisé en ce que** le procédé comprend

   - après la réception d'une pluralité de signaux de contrôle externes provenant d'un ou plusieurs détecteurs de présence disposés ailleurs qu'à l'intérieur de la zone d'éclairage de ladite source de lumière, lesquels signaux de contrôle externes indiquent la présence d'utilisateurs ailleurs, l'association de différentes sources de signaux de contrôle externes à des quantités spécifiques de temps desquelles le temps restant jusqu'à l'expiration de ladite minuterie sera modifié en fonction d'un nombre de règles, et
   - la fois suivante qu'un signal de contrôle externe est reçu pendant que la minuterie s'écoule, la modification du temps restant jusqu'à l'expiration de ladite minuterie d'une quantité associée à la source depuis laquelle le signal de contrôle externe a été reçu.

2. Procédé selon la revendication 1, comprenant :

   - l'association d'une source particulière de signaux de contrôle externes reçus avec un raccourcissement du temps restant jusqu'à l'expiration de ladite minuterie, en réponse à la reconnaissance répétée de cette source comme l'origine d'un premier signal de contrôle externe après une période sans aucun signal de contrôle externe reçu, et/ou
   - l'association d'une source particulière de signaux de contrôle externes reçus avec un raccourcissement du temps restant jusqu'à l'expiration de ladite minuterie, en réponse à la reconnaissance répétée de cette source comme l'origine d'un dernier signal de contrôle externe avant une période sans aucun signal de contrôle externe reçu.

3. Procédé selon la revendication 2 dans lequel, la fois suivante qu'un signal de contrôle externe est reçu pendant que la minuterie s'écoule depuis une source associée avec un raccourcissement du temps restant jusqu'à l'expiration de ladite minuterie, l'exécution du raccourcissement du temps restant uniquement si l'intervalle entre le lancement de ladite minuterie et la réception d'un tel signal de contrôle externe est plus long qu'un premier seuil prédéterminé et/ou plus court qu'un deuxième seuil prédéterminé, plus long.

4. Procédé selon l'une quelconque des revendications précédentes, comprenant :

- l'association d'une source particulière de signaux de contrôle externes reçus avec un allongement du temps restant jusqu'à l'expiration de ladite minuterie, en réponse à la reconnaissance répétée de cette source comme l'origine de signaux de contrôle qui viennent au milieu de séquences de signaux de contrôle reçus.

5. Procédé selon l'une quelconque des revendications précédentes, comprenant :

- l'association d'une source particulière de signaux de contrôle externes reçus avec un raccourcissement du temps restant jusqu'à l'expiration de ladite minuterie, en réponse à la reconnaissance répétée de cette source comme l'origine du premier signal de contrôle externe après le lancement de ladite minuterie.

6. Procédé selon la revendication 5, dans lequel la source particulière de signaux de contrôle externes reçus est associée avec un raccourcissement du temps restant jusqu'à l'expiration de ladite minuterie, en réponse à la reconnaissance répétée de cette source comme l'origine du premier signal de contrôle externe après des cas de lancement de ladite minuterie qui se soldent par l'expiration de la minuterie sans que de nouveaux événements déclencheurs n'aient été observés.

7. Procédé selon l'une quelconque des revendications précédentes, dans lequel ledit événement déclencheur est un signal reçu depuis un capteur de mouvement, indiquant la présence d'un utilisateur à l'intérieur d'une zone d'éclairage de ladite source de lumière.

8. Procédé selon l'une quelconque des revendications 1 à 6, dans lequel ledit événement déclencheur est un message sans fil reçu depuis un autre dispositif d'éclairage et indiquant la présence d'un utilisateur à l'intérieur d'une zone adjacente à une zone d'éclairage de ladite source de lumière.

9. Dispositif destiné à contrôler la lumière émise par une source de lumière, comprenant :

- une minuterie configurée pour s'écouler jusqu'à expiration pour mesurer un laps de temps jusqu'à ce que la lumière doive être réglée à un niveau passif,
- un contrôleur de niveau de lumière configuré pour régler la lumière à un niveau actif, supérieur audit niveau passif, en réponse à un événement déclencheur indiquant la présence d'un utilisateur, et pour régler la lumière audit niveau passif si la minuterie expire sans qu'aucun nouvel événement déclencheur n'ait été observé, et
- un contrôleur de minuterie configuré pour répondre à la réception d'un signal de contrôle externe pendant que la minuterie s'écoule, lequel signal de contrôle externe indique la présence d'un utilisateur ailleurs, en modifiant le temps restant jusqu'à l'expiration de ladite minuterie ;

**caractérisé en ce que** ledit contrôleur de minuterie est configuré pour associer, après avoir reçu une pluralité de signaux de contrôle externes provenant d'un ou plusieurs détecteurs de présence disposés ailleurs qu'à l'intérieur de la zone d'éclairage de ladite source de lumière, et lesquels signaux de contrôle externes indiquent la présence d'utilisateurs ailleurs, différentes sources de signaux de contrôle externes avec des quantités spécifiques de temps desquelles le temps restant jusqu'à l'expiration de ladite minuterie sera modifié en fonction d'un nombre de règles, et dans lequel ledit contrôleur de minuterie est configuré pour modifier, la fois suivante qu'un signal de contrôle externe est reçu pendant que la minuterie s'écoule, le temps restant jusqu'à l'expiration de ladite minuterie d'une quantité associée avec la source depuis laquelle le signal de contrôle externe a été reçu.

10. Programme informatique destiné à contrôler la lumière émise par une source de lumière, comprenant un ou plusieurs ensembles d'instructions lisibles par machine qui, exécutées par un ou plusieurs processeurs, sont configurées pour provoquer l'exécution d'un procédé qui comprend :

- le réglage de la lumière à un niveau actif en réponse à un événement déclencheur indiquant la présence d'un utilisateur,
- le lancement d'une minuterie adaptée pour s'écouler jusqu'à expiration pour mesurer un laps de temps jusqu'à ce que la lumière doive être réglée à un niveau passif qui est inférieur audit niveau actif,
- si la minuterie expire sans qu'aucun nouvel événement déclencheur n'ait été observé, le réglage de la lumière audit niveau passif,
- la réponse à la réception d'un signal de contrôle externe pendant que la minuterie s'écoule, lequel signal de contrôle externe indique la présence d'un utilisateur ailleurs, par modification du temps restant jusqu'à l'expiration de ladite minuterie,

EP 3 300 459 B1

**caractérisé en ce que** le procédé comprend

- après la réception d'une pluralité de signaux de contrôle externes provenant d'un ou plusieurs détecteurs de présence disposés ailleurs qu'à l'intérieur de la zone d'éclairage de ladite source de lumière, lesquels signaux de contrôle externes indiquent la présence d'utilisateurs ailleurs, l'association de différentes sources de signaux de contrôle externes avec des quantités spécifiques de temps desquelles le temps restant jusqu'à l'expiration de la minuterie sera modifié en fonction d'un nombre de règles, et
- la fois suivante qu'un signal de contrôle externe est reçu pendant que la minuterie s'écoule, la modification du temps restant jusqu'à l'expiration de ladite minuterie d'une quantité associée avec la source depuis laquelle le signal de contrôle externe a été reçu.

**Fig. 1**

**Fig. 2**

**Fig. 3**

```
                                           ┌402
                              ┌──────────────────────────┐
                              │   FIRST (AFTER            │
                              │      PAUSE)               │
                              └──────────────────────────┘          ┌411
                                           ┌403          ┌──────────────────────────┐
                              ┌──────────────────────────┐│   BORDER NODE,          │
              ┌401            │   LAST (BEFORE           ││   SHORTEN TIME           │
  ┌──────────────────────┐    │      PAUSE)              │└──────────────────────────┘
  │ ANALYSE RECEIVED     │    └──────────────────────────┘
  │ CONTROL MESSAGES     │
  └──────────────────────┘               ┌404                      ┌412
                              ┌──────────────────────────┐┌──────────────────────────┐
                              │   MIDDLE IN              ││   INTERIOR NODE,         │
                              │   SEQUENCE               ││   LENGTHEN TIME          │
                              └──────────────────────────┘└──────────────────────────┘

                                           ┌405                      ┌413
                              ┌──────────────────────────┐┌──────────────────────────┐
                              │   FIRST (AFTER           ││   NEIGHBOUR NODE,        │
                              │   STARTING TIMER)        ││   SHORTEN TIME           │
                              └──────────────────────────┘└──────────────────────────┘
```

**Fig. 4**

```
                                           ┌502                      ┌511
                              ┌──────────────────────────┐┌──────────────────────────┐
              ┌501            │   FINDINGS OF            ││   BORDER NODE,           │
  ┌──────────────────────┐    │   PASSERS-BY             ││   SHORTEN DELAY          │
  │ FACTORY-SET          │    └──────────────────────────┘└──────────────────────────┘
  │ DEFAULT DELAY        │                 ┌503                      ┌512
  └──────────────────────┘    ┌──────────────────────────┐┌──────────────────────────┐
                              │   FINDINGS OF            ││   INTERIOR NODE,         │
                              │   LOITERERS              ││   LENGTHEN DELAY         │
                              └──────────────────────────┘└──────────────────────────┘
```

**Fig. 5**

|                | TRANSMITTING NODE | | |
|----------------|-----|-----|-----|
|                | A   | B   | C   |
| A              | 10  | 10  | 10  |
| B              | 10  | 10  | 10  |
| C              | 10  | 10  | 10  |

RECEIVING NODE

SELF-LEARNING ⟹

|                | TRANSMITTING NODE | | |
|----------------|-----|-----|-----|
|                | A   | B   | C   |
| A              | 5   | 20  | 20  |
| B              | 5   | 20  | 20  |
| C              | 5   | 20  | 20  |

RECEIVING NODE

**Fig. 6**

701

**Fig. 7**

801
NEW OBSERVATION OR
TRIGGER TO UPDATE

802
GENERATE NEW
ASSOCIATION HYPOTHESES

803
GENERATE NEW
MOVEMENT HYPOTHESES

804
CALCULATE
PROBABILITIES

805
DELETE TRACKS WITH NO
RECENT OBSERVATIONS

806
COMBINE AND
MERGE

807
PRUNE LEAST PROBABLE
HYPOTHESES

808
ADD INITIALISATION
HYPOTHESIS

809
NORMALIZE
PROBABILITIES

**Fig. 8**

**Fig. 9**

**EP 3 300 459 B1**

## REFERENCES CITED IN THE DESCRIPTION

**Patent documents cited in the description**

- EP 2852259 A1
- WO 2011098931 A1
- WO 2011134003 A1
- EP 2919562 A